# EUROPEAN PATENT APPLICATION

(11) **EP 4 270 536 A1**
(43) Date of publication of application: **01.11.2023**
(21) Application number: 20967305.2
(22) Date of filing: 28.12.2020
(51) Int. Cl.: H01M 4/1395, H01M 4/36, H01M 4/38

(54) **SILICON-BASED COMPOSITE MATERIAL FOR NEGATIVE ELECTRODE OF LITHIUM ION BATTERY, PREPARATION METHOD THEREFOR AND APPLICATION THEREOF**

(71) Applicant: Ningde Amperex Technology Limited, Ningde, Fujian 352100 (CN)
(72) Inventor: CHEN, Zhihuan, Ningde Fujian 352100 (CN); JIANG, Daoyi, Ningde Fujian 352100 (CN)
(74) Representative: Icosa
(86) International application number: PCT/CN2020/140293
(87) International publication number: WO 2022/140953

(57) **Abstract**

This disclosure provides a silicon-based composite material for lithium-ion battery negative electrode, and a preparation method and application thereof. The silicon-based composite material includes: graphite, the graphite having a plurality of pores in surface; silicon particles, the silicon particles being filled in at least some of the pores; and a carbon layer, the carbon layer being disposed on the surface of the graphite.

## Description

### TECHNICAL FIELD

This disclosure relates to the field of lithium-ion batteries, and specifically to a silicon-based composite material for lithium-ion battery negative electrode, and a preparation method and application thereof.

### BACKGROUND

One aspect of technological innovation in lithium-ion batteries is to continuously improve the energy density. At present, the actual capacity of mainstream graphite materials is close to the theoretical capacity (372 mAh/g), and there is already a bottleneck in improving the energy density. Silicon-based negative electrode materials have attracted much attention and research because of their advantages such as abundant reserves, ultra-high theoretical capacity (4200 mAh/g), and environmental friendliness. However, the volume swelling (more than 300%) of the silicon-based negative electrode materials during cycling has seriously affected the process of industrial application of the silicon-based negative electrode materials.

Therefore, further research is needed for the silicon-based negative electrode materials.

### SUMMARY

This disclosure is intended to resolve at least one of the technical problems in the related art to some extent. In view of this, an objective of this disclosure is to provide a silicon-based composite material for lithium-ion battery negative electrode, where the silicon-based composite material features high capacity, good electrical conductivity, good cycling performance, or low swelling rate.

According to an aspect of this disclosure, this disclosure provides a silicon-based composite material. According to an embodiment of this disclosure, the silicon-based composite material includes: graphite, the graphite having a plurality of pores in surface; silicon particles, the silicon particles being filled in the pores of the graphite; and a carbon layer, the carbon layer being disposed on the surface of the graphite. In this way, the silicon-based composite material being used as the negative electrode material of lithium-ion battery allows the negative electrode material to have high capacity, good electrical conductivity, good cycling performance, or low swelling rate, thus effectively improving the performance and service life of the lithium-ion battery.

According to an embodiment of this disclosure, an average pore diameter D1 of the pores and a median particle size D2 of the silicon particles satisfy the following relational expression: D1/D2 ≥ 1.3.

According to an embodiment of this disclosure, an average pore diameter D1 of the pores and a median particle size D3 of the silicon-based composite material satisfy the following relational expression: D3/D1 ≥ 3.

According to an embodiment of this disclosure, the silicon-based composite material satisfies at least one of the following conditions: an average pore diameter D1 of the pores is 100 nm to 10 µm; a median particle size D2 of the silicon particles is 30 nm to 5 µm; a median particle size D3 of the silicon-based composite material is 0.5 µm to 60 µm; a median particle size of the graphite is 1 µm to 50 µm; for the pores including the silicon particles, each pore includes at least one of the silicon particles; or based on a total mass of the silicon-based composite material and measured in mass percentage, the silicon-based composite material includes: 30% to 99% of the graphite; 0.9% to 60% of the silicon particles; and 0.1% to 5% of the carbon layer.

According to an embodiment of this disclosure, the carbon layer satisfies at least one of the following conditions: the carbon layer has a thickness of 2 nm to 300 nm; and in Raman spectroscopy, a ratio of a peak height of the carbon layer at 1350 cm⁻¹ to a peak height at 1580 cm⁻¹ is 1.0 < I₁₃₅₀/I₁₅₈₀ < 3.

According to another aspect of this disclosure, this disclosure provides a method for preparing the foregoing silicon-based composite material. According to an embodiment of this disclosure, the method for preparing the silicon-based composite material for lithium-ion battery negative electrode includes: mixing and ball milling graphite and a pore-forming agent to obtain a graphite/pore-forming agent composite material; adding the graphite/pore-forming agent composite material to a pore-forming agent removal solution, performing stirring and mixing to uniformity, and removing the pore-forming agent, to obtain graphite having a plurality of pores in surface; depositing silicon particles into the pores to obtain a graphite/silicon composite material; and forming a carbon layer on surface of the graphite/silicon composite material to obtain the silicon-based composite material, where optionally, a shape of the pore-forming agent is at least one of a spherical shape, a square shape, or an irregular shape, and optionally, a material of the pore-forming agent includes at least one of metal particles, metal alloy particles, or metal oxide particles. In this way, the silicon-based composite material being used as the negative electrode material of lithium-ion battery allows the negative electrode material to have high capacity, good electrical conductivity, good cycling performance, or low swelling rate, thus effectively improving the performance and service life of the lithium-ion battery. In addition, the foregoing method is mature in technology, easy to implement, and suitable for industrial production.

According to another aspect of this disclosure, this disclosure provides a negative electrode material for lithium-ion battery. According to an embodiment of this disclosure, the negative electrode material includes: the foregoing silicon-based composite material; a carbon material; a conductive agent; and a binder. In this way, the negative electrode material has high capacity, good electrical conductivity, good cycling performance, or low swelling rate, thus effectively improving the performance and service life of the lithium-ion battery.

According to another aspect of this disclosure, this disclosure provides a negative electrode plate. According to an embodiment of this disclosure, the negative electrode plate includes the foregoing negative electrode material. In this way, the negative electrode plate has high capacity, good electrical conductivity, good cycling performance, or low swelling rate, thus effectively improving the performance and service life of the lithium-ion battery.

According to another aspect of this disclosure, this disclosure provides a lithium-ion battery. According to this embodiment of this disclosure, the lithium-ion battery includes the foregoing negative electrode plate. In this way, the lithium-ion battery has high capacity, good electrical conductivity, good cycling performance, or low swelling rate, thus effectively improving the performance and service life of the lithium-ion battery. Persons skilled in the related art can understand that the lithium-ion battery has all the features and advantages of the foregoing silicon-based composite material and the negative electrode plate, which is not described herein again.

### BRIEF DESCRIPTION OF DRAWINGS

FIG. 1 is a schematic structural diagram of a silicon-based composite material according to an embodiment of this disclosure.
FIG. 2 is a flowchart of a method for preparing silicon-based composite material according to another embodiment of this disclosure.
FIG. 3 is a scanning electron microscope image of a silicon-based composite material in Example 2.
FIG. 4 is a scanning electron microscope image of a silicon-based composite material in Example 2.

### EMBODIMENTS

The following describes some embodiments of this disclosure in detail. The embodiments described below are illustrative and only used for explaining this disclosure, and cannot be construed as limitations on this disclosure. Embodiments whose technical solutions or conditions are not specified are made in accordance with technical solutions or conditions described in literature in the field or made in accordance with product instructions. The reagents or instruments used are all conventional products that are commercially available if no manufacturer is indicated.

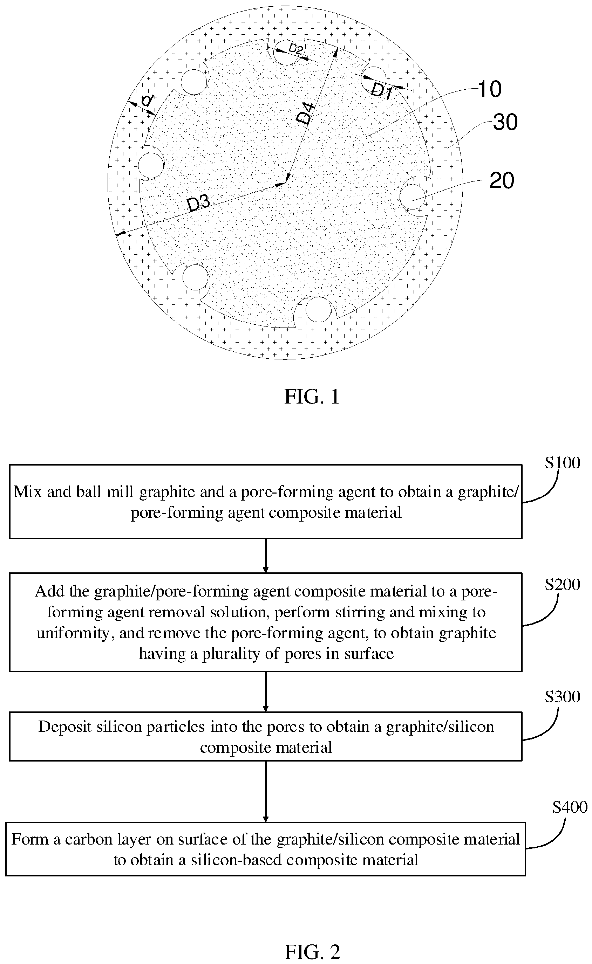

According to an aspect of this disclosure, this disclosure provides a silicon-based composite material. According to an embodiment of this disclosure, referring to FIG. 1, the silicon-based composite material includes: graphite 10, the graphite 10 having a plurality of pores 11 in surface; silicon particles 20, the silicon particles 20 being filled in the pores 11 in surface of the graphite; and a carbon layer 30, the carbon layer 30 being disposed on an outer surface of the graphite 10. In this way, the silicon-based composite material being used as a negative electrode material of lithium-ion battery allows the negative electrode material to have high capacity, good electrical conductivity, and good cycling performance, effectively alleviating the swelling of a battery negative electrode plate, thus effectively improving the performance and service life of the lithium-ion battery.

Further, the carbon layer 30 can further cover the pores 11, thus avoiding the silicon particles 20 separating from the pores 11 in a process of using the silicon-based composite material to prepare negative electrode plate.

According to an embodiment of this disclosure, an average pore diameter D1 of the pores and a median particle size D2 of the silicon particles satisfy the following relational expression: D1/D2 ≥ 1.3. In this way, the silicon particles can be well filled in the pores. In addition, the silicon particles have a specified swelling rate, and therefore as compared with the particle size of the silicon particles, pores with a large pore diameter leave some swelling room for the silicon particles, effectively alleviating the swelling of the battery negative electrode plate, thus effectively improving the performance and service life of the lithium-ion battery.

According to an embodiment of this disclosure, an average pore diameter D1 of the pores and a median particle size D3 of the silicon-based composite material satisfy the following relational expression: D3/D1 ≥ 3. This effectively ensures the electrical conductivity, gram capacity, and energy density of the battery negative electrode plate. If the average pore diameter of the pores is relatively large (that is, D3/D1 < 3), the gram capacity and energy density of the battery negative electrode plate are affected.

According to an embodiment of this disclosure, the average pore diameter D1 of the pores is 100 nm to 10 µm, for example, 100 nm, 200 nm, 300 nm, 500 nm, 800 nm, 1 µm, 1.2 µm, 1.5 µm, 1.8 µm, 2 µm, 3 µm, 4 µm, 5 µm, 6 µm, 7 µm, 8 µm, 9 µm, or 10 µm. The median particle size D2 of the silicon particles is 30 nm to 5 µm, for example, 30 nm, 50 nm, 100 nm, 200 nm, 300 nm, 400 nm, 500 nm, 600 nm, 700 nm, 800 nm, 1 µm, 1.2 µm, 1.5 µm, 1.8 µm, 2 µm, 2.5 µm, 3 µm, 3.5 µm, 4 µm, 4.5 µm, or 5 µm. In this way, in the foregoing particle size range, the silicon-based composite material has good electrical conductivity and capacity, effectively alleviating the swelling of the battery negative electrode plate, thus improving cycling performance of the negative electrode plate.

According to this embodiment of this disclosure, the median particle size D3 of the silicon-based composite material is 0.5 µm to 60 µm, for example, 0.5 µm, 1 µm, 5 µm, 10 µm, 158 µm, 18 µm, 20 µm, 22 µm, 25 µm, 28 µm, 30 µm, 33 µm, 35 µm, 38 µm, 40 µm, 42 µm, 45 µm, 48 µm, 50 µm, 52 µm, 55 µm, 57 µm, or 60 µm. In this way, the silicon-based composite material with the above particle size has a suitable and large specific surface area, which helps to further improve the cycling performance and capacity of the negative electrode plate.

According to this embodiment of this disclosure, the median particle size D4 of the graphite is 1 µm to 50 µm, for example, 1 µm, 5 µm, 10 µm, 158 µm, 18 µm, 20 µm, 22 µm, 25 µm, 28 µm, 30 µm, 33 µm, 35 µm, 38 µm, 40 µm, 42 µm, 45 µm, 48 µm, or 50 µm. This effectively ensures good electrical conductivity of the silicon-based composite material.

According to an embodiment of this disclosure, for the pores including the silicon particles, each pore includes at least one of the silicon particles. Based on the foregoing average pore diameter of the pores and the median particle size of the silicon particles, one or more silicon particles can be filled in each pore, and some swelling room can be left for the silicon particles, thus ensuring good cycling performance of the negative electrode plate.

According to this embodiment of this disclosure, a specific type of the graphite includes at least one of artificial graphite, natural graphite, or meso-carbon microbeads; and the carbon layer includes an amorphous carbon layer, carbon nanotubes, conductive carbon black, or graphene. In this way, the foregoing material facilitates preparation, features good electrical conductivity and low costs, and helps to ensure good use performance of the negative electrode material.

According to this embodiment of this disclosure, the carbon layer has a thickness d of 2 nm to 300 nm, for example, 2 nm, 5 nm, 10 nm, 50 nm, 80 nm, 100 nm, 120 nm, 150 nm, 180 nm, 200 nm, 220 nm, 250 nm, 280 nm, or 300 nm. The carbon layer structure with the foregoing thickness can not only ensure good electrical conductivity of the silicon-based composite material, but also ensure good cycling performance and gram capacity of the lithium-ion battery.

According to this embodiment of this disclosure, in Raman spectroscopy, a ratio of a peak height of the carbon layer at 1350 cm⁻¹ to a peak height at 1580 cm⁻¹ is 1.0 < I₁₃₅₀/I₁₅₈₀ < 3.

According to this embodiment of this disclosure, based on a total mass of the silicon-based composite material and measured in mass percentage, the silicon-based composite material includes: 30 wt% to 99 wt% (for example, 30 wt%, 35 wt%, 40 wt%, 50 wt%, 60 wt%, 70 wt%, 80 wt%, 90 wt%, or 99 wt%) of the graphite; 0.9 wt% to 60 wt% (for example, 0.9 wt%, 15 wt%, 20 wt%, 30 wt%, 40 wt%, 50 wt%, or 60 wt%) of the silicon particles; and 0.1 wt% to 5 wt% (for example, 0.1 wt%, 0.5 wt%, 1 wt%, 1.5 wt%, 2 wt%, 2.5 wt%, 3 wt%, 3.5 wt%, 4 wt%, 4.5 wt%, or 5 wt%) of the carbon layer. In this way, the silicon-based composite material formed based on the foregoing composition ratio has good electrical conductivity, gram capacity, and energy density, thus ensuring good cycling performance of the negative electrode plate.

According to another aspect of this disclosure, this disclosure provides a method for preparing the foregoing silicon-based composite material. According to an embodiment of this disclosure, referring to FIG. 2, the method for preparing silicon-based composite material for lithium-ion battery negative electrode includes the following steps.

S100: Mix and ball mill graphite and a pore-forming agent to obtain a graphite/pore-forming agent composite material.

In some embodiments, the graphite, the pore-forming agent, a dispersing agent, and a solvent can be further mixed and wet ball milled, to obtain the graphite/pore-forming agent composite material. A material of the pore-forming agent includes at least one of metal particles, metal alloy particles, or metal oxide particles. A specific material of the metal particles may be at least one of Al, Zn, Fe, or Sn. In this way, the pore-forming agent has high hardness and can be embedded and extruded into the graphite through ball milling. In some embodiments, the dispersing agent is ethanol, ethylene glycol, or a combination of the two, and therefore can allow the graphite and the pore-forming agent to be mixed to uniformity during wet ball milling, which helps to obtain pores distributed uniformly.

Further, a shape of the pore-forming agent is at least one of a spherical shape, a square shape, or an irregular shape. In this way, corresponding preparation is performed to obtain pores in the spherical shape, the square shape, or the irregular shape.

S200: Add the graphite/pore-forming agent composite material to a pore-forming agent removal solution, perform stirring and mixing to uniformity, and remove the pore-forming agent, to obtain graphite having a plurality of pores in surface.

Persons skilled in the related art can select a pore-forming removal agent based on the specific material of the pore-forming agent. In some embodiments, the pore-forming agent is at least one of metal, metal alloy particles, or a metal oxide, and dilute hydrochloric acid or dilute sulfuric acid can be selected as the pore-forming removal agent to remove the pore-forming agent through chemical reaction, so as to obtain the pores.

S300: Deposit silicon particles into the pores to obtain a graphite/silicon composite material.

In some embodiments, the silicon particles can be deposited into the pores in surface of the graphite using the chemical vapor deposition or physical vapor deposition method, to obtain the graphite/silicon composite material. In this way, the foregoing method is mature in technology, easy to implement, and suitable for industrial production.

S400: Form a carbon layer on surface of the graphite/silicon composite material to obtain a silicon-based composite material.

In some embodiments, the chemical vapor deposition or liquid phase method can be used to form the carbon layer on the surface of the graphite/silicon composite material, thus obtaining the silicon-based composite material. In this way, the foregoing method is mature in technology, easy to implement, and suitable for industrial production.

According to this embodiment of this disclosure, the silicon-based composite material being used as a negative electrode material of lithium-ion battery allows the negative electrode material to have high capacity, good electrical conductivity, and good cycling performance, effectively alleviating the swelling of the battery negative electrode plate, thus effectively improving the performance and service life of the lithium-ion battery. In addition, the foregoing method is mature in technology, easy to implement, and suitable for industrial production.

According to another aspect of this disclosure, this disclosure provides a negative electrode material for lithium-ion battery. According to an embodiment of this disclosure, the negative electrode material includes: the foregoing silicon-based composite material; a carbon material; a conductive agent; and a binder. In this way, the negative electrode material has high capacity, good electrical conductivity, good cycling performance, or low swelling rate, thus effectively improving the performance and service life of the lithium-ion battery.

According to an embodiment of this disclosure, there is no special requirement for the specific composition ratio of the silicon-based composite material, the carbon material, the conductive agent, and the binder in the negative electrode material, and persons skilled in the related art can make flexible selections based on actual situations. This is not limited herein.

According to an embodiment of this disclosure, the carbon material includes at least one of artificial graphite or natural graphite. The conductive agent includes carbon nanotubes, vapor grown carbon fibers, conductive carbon black, acetylene black, Ketjen black, conductive graphite, or graphene. The binder includes at least one of polyacrylate, polyimide, polyamide, polyamideimide, polyfluoroethylene, styrene butadiene rubber, sodium alginate, polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose. In this way, the foregoing materials are widely sourced and have better use performance, which is conducive to improving performance of the negative electrode material.

According to another aspect of this disclosure, this disclosure provides a negative electrode plate. According to an embodiment of this disclosure, the negative electrode plate includes the foregoing negative electrode material. In this way, the negative electrode plate has high capacity, good electrical conductivity, good cycling performance, or low swelling rate, thus effectively improving the performance and service life of the lithium-ion battery.

According to another aspect of this disclosure, this disclosure provides a lithium-ion battery. According to this embodiment of this disclosure, the lithium-ion battery includes the foregoing negative electrode plate. In this way, the lithium-ion battery has high capacity, good electrical conductivity, good cycling performance, or low swelling rate, thus effectively improving the performance and service life of the lithium-ion battery. Persons skilled in the related art can understand that the lithium-ion battery has all the features and advantages of the foregoing silicon-based composite material and the negative electrode plate, which is not described herein again.

### Examples

Steps of preparing negative electrode material of negative electrode plate were as follows.

S 100: Graphite and a pore-forming agent were mixed and ball milled to obtain a graphite/pore-forming agent composite material.

S200: The graphite/pore-forming agent composite material was added to a pore-forming agent removal solution, then stirring and mixing to uniformity were performed, and the pore-forming agent was removed, to obtain graphite having a plurality of pores in surface.

S300: Silicon particles were deposited into the pores to obtain a graphite/silicon composite material.

S400: A carbon layer was formed on surface of the graphite/silicon composite material to obtain a silicon-based composite material, where based on a total mass of the silicon-based composite material and measured in mass percentage, the silicon-based composite material included: 30 wt% to 99 wt% of the graphite; 0.9 wt% to 60 wt% of the silicon particles; and 3 wt% of the carbon layer.

S500: The prepared silicon-based composite material was mixed with a carbon material (artificial graphite), a conductive agent (super P), and a binder (PAA) to obtain a negative electrode plate, where a mass ratio of the silicon-based composite material, the carbon material, the conductive agent, and the binder was 85:10:1.2:3.8.

Steps of preparing negative electrode material of positive electrode plate were as follows.

An active substance LiCoO₂, a conductive carbon black, and a binder polyvinylidene fluoride (PVDF) were fully stirred and mixed to uniformity in an N-methylpyrrolidone solvent system at a mass ratio of 96.7:1.7:1.6, and then the resulting mixture was applied onto an Al foil, followed by drying and cold pressing to obtain a positive electrode plate.

With a PE porous polymeric film as a separator, the positive electrode plate, the separator, and the negative electrode plate were stacked in sequence, so that the separator was placed between negative and positive electrodes for separation, and the resulting stack was wound to obtain a bare cell. The bare cell was placed in an outer package, a prepared electrolyte was injected, and packaging was performed, followed by processes such as formation, degassing, and trimming, to obtain a full battery cell.

In Examples 1 to 12 and Comparative examples 1 to 4, the negative electrode plate, the positive electrode plate, and the full battery cell of the lithium-ion battery were prepared according to the foregoing steps. For differences of parameters in the examples, reference may be made to Table 1, and for the test results of the prepared battery, reference may be made to Table 2.

**Table 1**

| | Amount of graphite (g) | Graphite Dᵥ50 (µm) | Average pore diameter of pores (µm) | Amount of silicon added (g) | Silicon particle Dᵥ50 (µm) |
|---|---|---|---|---|---|
| Example 1 | 100 | 20 | 0.15 | 10 | 0.1 |
| Example 2 | 100 | 20 | 0.7 | 10 | 0.5 |
| Example 3 | 100 | 20 | 3 | 10 | 2 |
| Example 4 | 100 | 20 | 5 | 10 | 3 |
| Example 5 | 100 | 20 | 3 | 10 | 0.1 |
| Example 6 | 100 | 20 | 3 | 10 | 0.5 |
| Example 7 | 100 | 20 | 4.5 | 10 | 2 |
| Example 8 | 100 | 20 | 6 | 10 | 2 |
| Example 9 | 100 | 9 | 3 | 10 | 2 |
| Example 10 | 100 | 15 | 3 | 10 | 2 |
| Example 11 | 100 | 20 | 3 | 5 | 2 |
| Example 12 | 100 | 20 | 3 | 20 | 2 |
| Example 13 | 100 | 20 | 3 | 10 | 3 |
| Example 14 | 100 | 20 | 2 | 10 | 2 |
| Example 15 | 100 | 6 | 3 | 10 | 2 |
| Example 16 | 100 | 20 | 3 | 30 | 2 |

**Table 2**

| | Cycles when capacity decays to 80% | Full charge swelling of battery cell after 500 cycles |
|---|---|---|
| Example 1 | 625 | 8.5% |
| Example 2 | 574 | 8.9% |
| Example 3 | 538 | 9.4% |
| Example 4 | 498 | 9.7% |
| Example 5 | 527 | 8.2% |
| Example 6 | 598 | 9.0% |
| Example 7 | 549 | 9.2% |
| Example 8 | 558 | 8.6% |
| Example 9 | 461 | 9.7% |
| Example 10 | 492 | 9.6% |
| Example 11 | 645 | 7.2% |
| Example 12 | 401 | 13.5% |
| Example 13 | 478 | 11.5% |
| Example 14 | 467 | 11.9% |
| Example 15 | 398 | 10.2% |
| Example 16 | 283 | 17.9% |

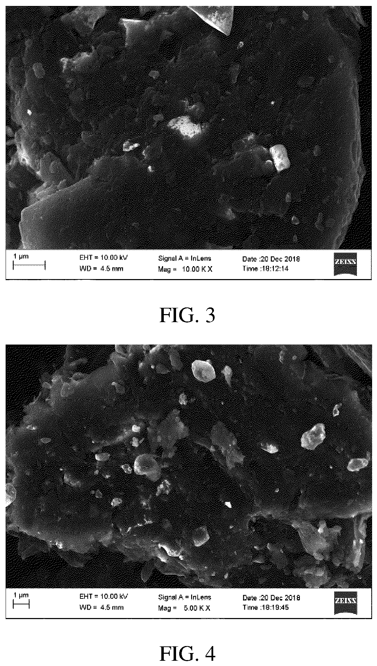

The negative electrode material prepared in Example 2 was subjected to SEM test as follows: Scanning electron microscope characterization was recorded with a PhilipsXL-30 field emission scanning electron microscope. Testing was performed at 10 kV and 10 mA. For a scanning electron microscope SEM image, reference may be made to FIGs. 3 and 4. It can be learned from the SEM test image that the silicon particles are filled in the pores in surface of the graphite.

The method for testing the median particle sizes of the graphite, the silicon particles, and the silicon material in Table 1 was as follows: The silicon-based composite material was made into an electrode plate, a cross section of the electrode plate was cut for observation, particle sizes of the graphite in 100 particles were tested, and an average value was taken to serve as the median particle size of the graphite; and particle sizes of silicon particles in 100 particles were tested, and an average value was taken to serve as the median particle size of the silicon particles.

High-temperature cycling test of battery cell: At a test temperature of 45°C, the battery cell was charged to 4.4 V at a constant current of 0.7C, constant-voltage charged to 0.025C, left standing for 5 minutes, and then discharged to 3.0 V at 0.5C. A capacity obtained in this cycle was an initial capacity. Then, a 0.7C charge and 0.5C discharge cycling test was performed. A ratio of the capacity of each cycle to the initial capacity was calculated to obtain a capacity degradation curve.

Full charge swelling rate test of battery cell: Thickness of a fresh battery cell at half charge was measured by a spiral micrometer. After 400 cycles, when the battery cell was in a full charge state, the thickness of the battery cell was measured again by the spiral micrometer, and compared with the initial thicknesses of the fresh battery cell at half charge to obtain a full charge swelling rate of battery cell at that time.

### Test analysis results

Comparisons between Examples 1 to 4 indicate that when the average pore diameter D1 of the pores and the median particle size D2 of the silicon particles satisfy the following relational expression: D1/D2 ≥ 1.3, a smaller particle size of the silicon particles indicates a smaller local stress during lithium intercalation, less swelling of the silicon particles, and better cycling performance of the battery.

Comparisons between Examples 3, 5, and 6 and Example 13 indicate that when the pore diameters in the surface of the graphite are the same, a larger particle size of the silicon particles indicates a larger local stress during lithium intercalation, and that more particles cannot be intercalated into the pores in surface of the graphite. This cannot effectively suppress the swelling of the silicon particles and causes deterioration in swelling and cycling of the battery cell.

Comparisons between Examples 3, 7, and 8 and Example 14 indicate that when the particle sizes of the silicon particles are the same, a smaller pore diameter in surface of the graphite indicates that more silicon particles cannot effectively enter the pores in the surface of the graphite, and an effective space for accommodating swelling during lithium intercalation in silicon is reduced, which leads to significant deterioration in cycling performance and swelling of the battery cell.

Comparisons between Examples 3, 9, and 10 and Example 15 indicate that when the pore diameter of the pores is the same as the particle size of the silicon particles, a smaller particle size of the graphite causes more serious damage to the graphite, which leads to structural stability damage, thus causing deterioration in cycling and swelling.

Comparisons between Examples 3, 11, and 12 and Example 16 indicate that with the increase of the silicon content, more silicon particles cannot effectively enter the pores in the surface of the graphite, which leads to significant deterioration in cycling performance and swelling of the battery cell.

In the description of this specification, descriptions referring to the terms "an embodiment", "some embodiments", "an example", "a specific example", or "some examples" mean the specific features, structures, materials or characteristics described with reference to the embodiment or example are included in at least one embodiment or example of this disclosure. In this specification, illustrative expressions of these terms do not necessarily refer to the same embodiment or example. Moreover, the specific features, structures, materials, or characteristics described may be combined in any suitable manner in any one or more embodiments or examples. In addition, without mutual conflict, persons skilled in the art may incorporate and combine different embodiments or examples and features of the different embodiments or examples described in this specification.

Although the examples of this disclosure have been shown and described, it can be understood that these examples are illustrative and should not be construed as limitations on this disclosure. Persons of ordinary skill in the art can make changes, modifications, substitutions, and transformations to the examples within the scope of this disclosure.

## Claims

1. A silicon-based composite material, comprising:
graphite, the graphite having a plurality of pores in surface;
silicon particles, the silicon particles being filled in the pores of the graphite; and
a carbon layer, the carbon layer being disposed on the surface of the graphite.

2. The silicon-based composite material according to claim 1, wherein an average pore diameter D1 of the pores and a median particle size D2 of the silicon particles satisfy the following relational expression: D1/D2 ≥ 1.3.

3. The silicon-based composite material according to claim 1, wherein an average pore diameter D1 of the pores and a median particle size D3 of the silicon-based composite material satisfy the following relational expression: D3/D1 ≥ 3.

4. The silicon-based composite material according to claim 1, wherein an average pore diameter D1 of the pores is 100 nm to 10 µm.

5. The silicon-based composite material according to claim 1, wherein the silicon-based composite material satisfies at least one of the following conditions:
a median particle size D2 of the silicon particles is 30 nm to 5 µm;
a median particle size D3 of the silicon-based composite material is 0.5 µm to 60 µm;
a median particle size of the graphite is 1 µm to 50 µm;
for the pores comprising the silicon particles, each pore comprises at least one of the silicon particles; or
based on a total mass of the silicon-based composite material and measured in mass percentage, the silicon-based composite material comprises:
30% to 99% of the graphite;
0.9% to 60% of the silicon particles; and
0.1% to 5% of the carbon layer.

6. The silicon-based composite material according to claim 1, wherein the carbon layer satisfies at least one of the following conditions:
the carbon layer has a thickness of 2 nm to 300 nm; and
in Raman spectroscopy, a ratio of a peak height of the carbon layer at 1350 cm⁻¹ to a peak height at 1580 cm⁻¹ is 1.0 < I₁₃₅₀/I₁₅₈₀ < 3.

7. A method for preparing the silicon-based composite material according to any one of claims 1 to 6, comprising:
mixing and ball milling graphite and a pore-forming agent to obtain a graphite/pore-forming agent composite material;
adding the graphite/pore-forming agent composite material to a pore-forming agent removal solution, performing stirring and mixing to uniformity, and removing the pore-forming agent, to obtain graphite having a plurality of pores in surface;
depositing silicon particles into the pores to obtain a graphite/silicon composite material; and
forming a carbon layer on surface of the graphite/silicon composite material to obtain the silicon-based composite material, wherein
optionally, a shape of the pore-forming agent is at least one of a spherical shape, a square shape, or an irregular shape, and
optionally, a material of the pore-forming agent comprises at least one of metal particles, metal alloy particles, or metal oxide particles.

8. A negative electrode material for lithium-ion battery, comprising:
the silicon-based composite material according to any one of claims 1 to 6;
a carbon material;
a conductive agent; and
a binder.

9. A negative electrode plate, comprising the negative electrode material according to claim 8.

10. A lithium-ion battery, comprising the negative electrode plate according to claim 9.
